(19) Europäisches Patentamt
European Patent Office
Office européen des brevets

(11) **EP 3 396 605 A1**

(12) **EUROPEAN PATENT APPLICATION**

(43) Date of publication:
**31.10.2018 Bulletin 2018/44**

(51) Int Cl.:
***G06Q 10/00*** *(2012.01)*

(21) Application number: **18165988.9**

(22) Date of filing: **05.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.04.2017   US 201715496916**

(71) Applicant: **Palo Alto Research Center, Incorporated**
**Palo Alto, CA 94304 (US)**

(72) Inventors:
• **GANGULI, Anurag**
 **Palo Alto, CA California 94304 (US)**
• **RAGHAVAN, Ajay**
 **Palo Alto, CA California 94304 (US)**

(74) Representative: **Gill Jennings & Every LLP**
**The Broadgate Tower**
**20 Primrose Street**
**London EC2A 2ES (GB)**

(54) **SYSTEM AND METHOD FOR PREDICTIVE CONDITION MODELING OF ASSET FLEETS UNDER PARTIAL INFORMATION**

(57) One embodiment provides a system that facilitates development of a degradation model. During operation, the system initializes, for a physical asset in a cluster, a set of maintenance times randomly and based on constraints associated with the physical asset. The system estimates model parameters for the physical asset based on a degradation model, which indicates the set of maintenance times, a value of a measured characteristic for the physical asset at a given inspection time, a number of inspections, and a time for a respective inspection. The system calculates updated values for the set of maintenance times based on the degradation model and the estimated model parameters. In response to determining that an average change in maintenance times over all the physical assets in the cluster is greater than a predetermined threshold, the system re-estimates the model parameters and re-calculates the updated values for the set of maintenance times.

FIG. 1A

EP 3 396 605 A1

**Description**

**BACKGROUND**

**Field**

This disclosure is generally related to developing a degradation model. More specifically, this disclosure is related to a system and method for predictive condition modeling of asset fleets under partial information.

**Related Art**

Industrial and infrastructural asset fleets (e.g., railway tracks, road networks, and heavy machinery) degrade over time due to usage and environmental exposure. A model of degradation which predicts the assets' condition at a future time may be useful in planning maintenance and repair activities. Such a predictive degradation model may be derived from observed measurements of characteristics of the assets. However, in some instances, a sufficient amount of data (e.g., observed measurements) may not exist for an asset. Furthermore, a sufficient amount of information regarding the number and timing of previous maintenance activities may also not exist. These insufficiencies (i.e., scarcity of data and maintenance information) create challenges in developing a predictive degradation model.

**SUMMARY**

One embodiment provides a system that facilitates development of a degradation model. During operation, the system assigns physical assets into one or more clusters based on measured characteristics for the physical assets. The system initializes, for a physical asset in a cluster, a set of maintenance times randomly and based on constraints associated with the physical asset. A constraint can be based on knowledge of the domain. The system estimates model parameters for the physical asset based on a degradation model, which indicates the set of maintenance times, a value of a measured characteristic for the physical asset at a given inspection time, a number of inspections, and a time for a respective inspection. The system calculates updated values for the set of maintenance times based on the degradation model and the estimated model parameters. In response to determining that an average change in maintenance times over all the physical assets in the cluster is greater than a predetermined threshold, the system re-estimates the model parameters for the physical asset, and re-calculates the updated values for the set of maintenance times for the physical asset, thereby facilitating development of the degradation model, which predicts a maintenance schedule and a condition of the physical assets over time.

In some embodiments, the set of maintenance times indicates a number of maintenance activities and a time for a respective maintenance activity, and a constraint includes a minimum or a maximum time duration between successive maintenance activities.

In some embodiments, re-estimating the model parameters for the physical asset is based on the degradation model and the updated values for the set of maintenance times, and re-calculating the updated values for the set of maintenance times for the physical asset is based on the degradation model and the re-estimated model parameters.

In some embodiments, in response to determining that the average change in maintenance times over all the physical assets in the cluster is not greater than the predetermined threshold, the system returns the updated values for the set of maintenance times to a requesting entity in a predicted maintenance schedule for all the physical assets in the cluster.

In some embodiments, the system determines all possible maintenance times for the physical asset, wherein a maximum number of maintenance times exists. Calculating the updated values for the set of maintenance times is further based on one or more of the possible maintenance times for the physical asset.

In some embodiments, the physical assets are railway tracks, and the system divides the railway tracks into track segments of predetermined lengths. Assigning the physical assets into one or more clusters comprises assigning the track segments into one or more clusters based on measured characteristics for the track segments.

In some embodiments, the physical assets are railway tracks, track segments, or bridges. A measured characteristic for a physical asset is based on one or more of: a period of time; a date of manufacture of the physical asset; a manufacturer or owner of the physical asset; a temperature or climate of the area surrounding the physical asset; an amount of usage of the physical asset, including a weight and speed of freight or other vehicles traveling over the physical asset; a location of the physical asset; and a geometry of the physical asset in relation to other physical assets.

One embodiment provides a system that facilitates development of a degradation model. During operation, the system fits a non-linear discontinuous model to a set of data points, wherein a magnitude of one or more discontinuities in the model is known.

**BRIEF DESCRIPTION OF THE FIGURES**

FIG. 1A illustrates an exemplary environment for facilitating predictive condition modeling of physical assets, in accordance with an embodiment of the present invention.
FIG. 1B illustrates an exemplary degradation model, in accordance with an embodiment of the present invention.
FIG. 1C illustrates an exemplary maintenance model, in accordance with an embodiment of the present invention.
FIG. 2 presents a flow chart illustrating a method for facilitating predictive condition modeling of physical assets, in accordance with an embodiment of the present invention.
FIG. 3A illustrates an exemplary table indicating results from various trials, based on a quadratic degradation model, in accordance with an embodiment of the present invention.
FIG. 3B illustrates an exemplary table indicating results from various trials, based on a degradation model using a periodic component, in accordance with an embodiment of the present invention.
FIG. 4 presents a flow chart illustrating a method for facilitating predictive condition modeling of physical assets which are railway tracks, in accordance with an embodiment of the present invention.
FIG. 5 illustrates an exemplary distributed computer and communication system that facilitates predictive condition modeling of physical assets, in accordance with an embodiment of the present invention.

In the figures, like reference numerals refer to the same figure elements.

**DETAILED DESCRIPTION**

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

<u>Overview</u>

Embodiments of the present invention solve the problem of developing a predictive degradation model for physical assets while accounting for insufficient data and maintenance information. A typical degradation model may require a certain amount of observed and measured data, as well as model parameters. However, the scarcity of existing data for a specific asset may create challenges in estimating model parameters. That is, an insufficient amount of historical data may exist for a set of physical assets, e.g., a particular segment of railway tracks. To address this issue, embodiments of the present invention first group the physical assets into clusters based on characteristics or parameters which may be predictive of failure. For a given segment of railway tracks, these characteristics may include, e.g., geographic location, weather, similarity with other models, and manufacture date. Once the assets are assigned to a cluster, the system can develop a common model of degradation for all assets within a cluster. Thus, the multiplicity of assets within a cluster can solve the data scarcity issue.

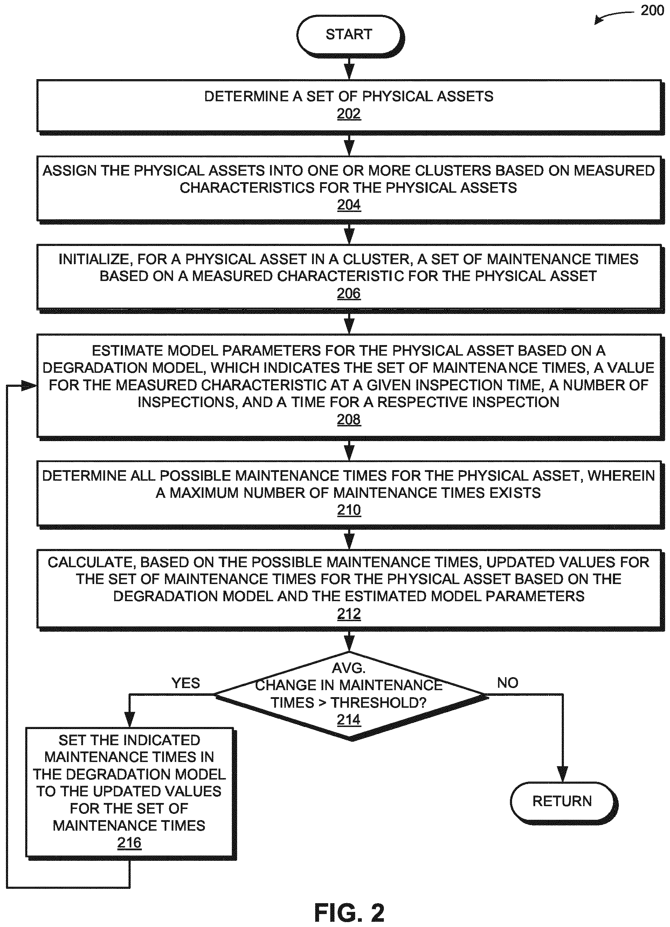

For each measured parameter, the system can use a simplified maintenance model, which is effectively the difference in the value of the measured parameter before and after maintenance (as described below in relation to FIG. 2 and Equations (4) and (6)).

Subsequently, the system can use an iterative process to estimate both the maintenance activity times and the parameters for the degradation model. For each asset within a cluster, the system can initialize the number and times of maintenance activities. Based on this initialization, the system can use a common degradation model for all assets within a cluster, where the degradation model is a function of, e.g., time, loading, temperature, and other time-varying variables. The degradation model may use model parameters, known inspection times, and a known difference between a measured characteristic before and after a maintenance activity. The system can construct this degradation model based on nonlinear regression over the independent model parameters.

Using this model, the system can determine the number and times of maintenance activities. The system can repeat this process until the number and times of maintenance activities for a sufficiently large fraction of assets within the cluster converge (i.e., until the average change in maintenance times over all the assets in the cluster is less than a predetermined threshold). While the system cannot guarantee uniqueness, the system can guide the estimation to converge on correct values by applying rules such as an upper bound on the inter-maintenance times and the value of the measured parameters at maintenance.

Thus, embodiments of the present invention provide a system which improves predictive condition modeling of physical assets with an insufficient amount of observed data and maintenance information, where the improvements are fundamentally technological. The system provides a technological solution (e.g., assigning physical assets into clusters, iteratively determining model parameters and maintenance times based on the physical assets in a cluster, and developing a degradation model) to the technological problem of developing a degradation model which predicts a maintenance schedule and a condition of the physical assets over time.

**Exemplary Environment and Communication**

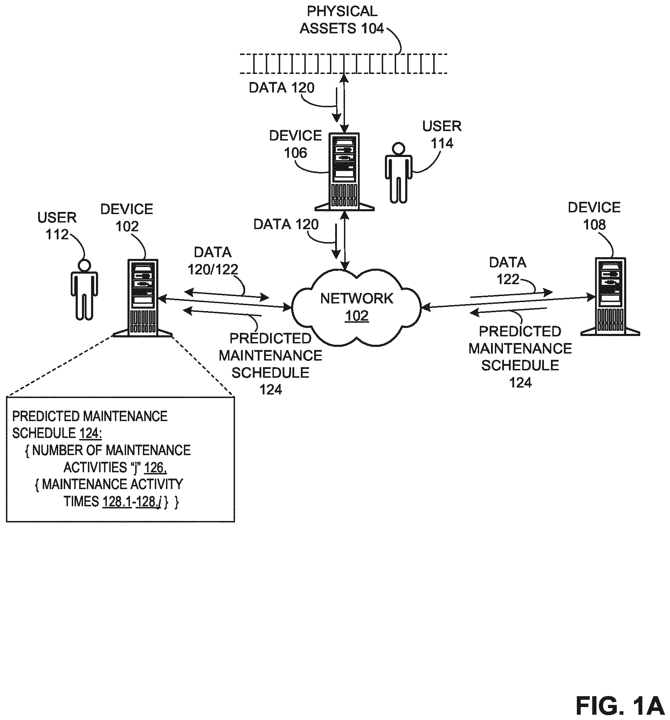

FIG. 1A illustrates an exemplary environment 100 for facilitating predictive condition modeling of physical assets, in accordance with an embodiment of the present invention. Environment 100 can include: a device 102 and an associated user 112; a device 106 and an associated user 114; physical assets 104 in communication with device 106; and a device 108. Devices 102, 106, and 108 can communicate with each other via a network 102. During operation, device 106 can monitor and collect data 120 from physical assets 104. This collection may occur directly via a wired connection or via a wireless connection (e.g., sensors communicating via network 102).

Device 102 can receive collected data 120, and determine measured characteristics based on collected data 120. For example, device 102 can determine a value for a usage variable over a certain period of time based on collected data 120. Device 102 can transmit data 122 (which can include data 120 and any determined measured characteristics) to device 108.

Device 108 can be a server which performs the algorithms discussed herein. Device 108 can assign assets 104 into clusters based on the measured characteristics of assets 104 (which measured characteristics are included in data 122). Device 108 can then iteratively estimate or predict a set of optimal maintenance times, by using a combined degradation and maintenance model which is common to all assets in a cluster. Based on the iterative estimations, device 108 can generate a predicted maintenance schedule 124. Iterative estimations using a combined degradation and maintenance model are described below in relation to FIG. 2.

Device 108 can subsequently transmit predicted maintenance schedule 124 to device 102. In turn, device 102 can store predicted maintenance schedule 124 in a storage device (not shown) of device 102. Maintenance schedule 124 can include a number of maintenance activities "j" 126 and a set of maintenance activity times 128.1-128.*j*.

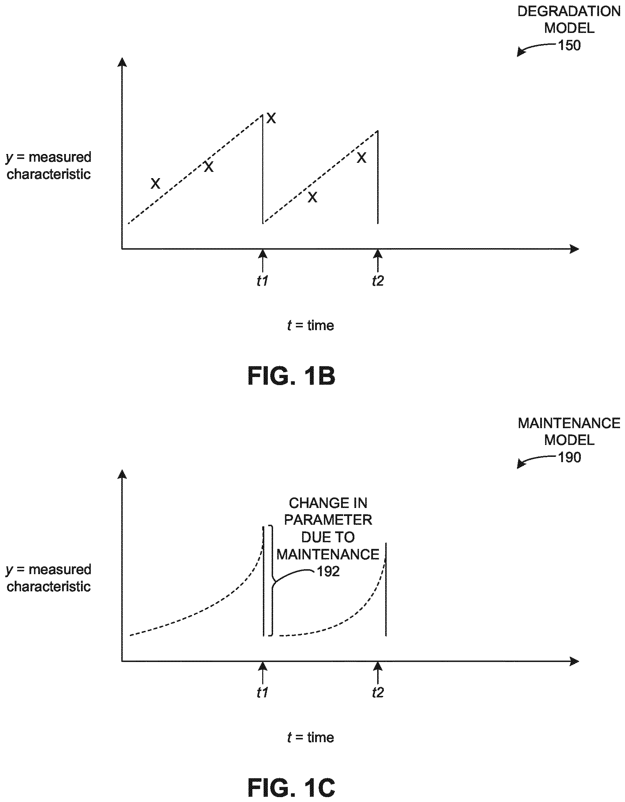

FIG. 1B illustrates an exemplary degradation model 150, in accordance with an embodiment of the present invention. Model 150 can include an x-axis which represents a time t, and a *y*-axis which represents a measured characteristic. Model 150 can also include X's which represent measured data for the characteristic for a single physical asset in a cluster. The system can initialize a set of maintenance times randomly but subject to constraints associated with the physical asset. For example, a constraint may be based on knowledge of the domain, and can include a minimum or a maximum time duration between successive maintenance activities. Note that a set of maintenance times indicates both a number of maintenance activities and a time for a respective maintenance activity. The system can use the initial maintenance times to estimate model parameters by solving a non-linear optimization problem (e.g., by using a degradation model). The system can then use the estimated model parameters to calculate a set of maintenance times (e.g., by using the degradation model). The system can iterate through all the possible sets of maintenance times for the physical asset, and for all assets in a cluster, until the sets converge (i.e., until the average change in maintenance times over all the physical assets is less than a predetermined threshold).

FIG. 1C illustrates an exemplary maintenance model 190, in accordance with an embodiment of the present invention. Maintenance model 190 can include an x-axis which represents a time t, and a y-axis which represents a measured characteristic. The system can use a simplified maintenance model, which is effectively the difference in the value of the measured characteristic (or parameter) before and after maintenance. In other words, maintenance model 190 depicts a change in parameter due to maintenance 192, which is the difference in the value of the measured characteristic *y* before and after maintenance (e.g., before and after time *t1*). Thus, the system fits a non-linear discontinuous model (such as in FIG. 1C) to a set of data points, where a magnitude of one or more discontinuities (such as change 192) is known.

**Method for Facilitating Development of Predictive Degradation Model**

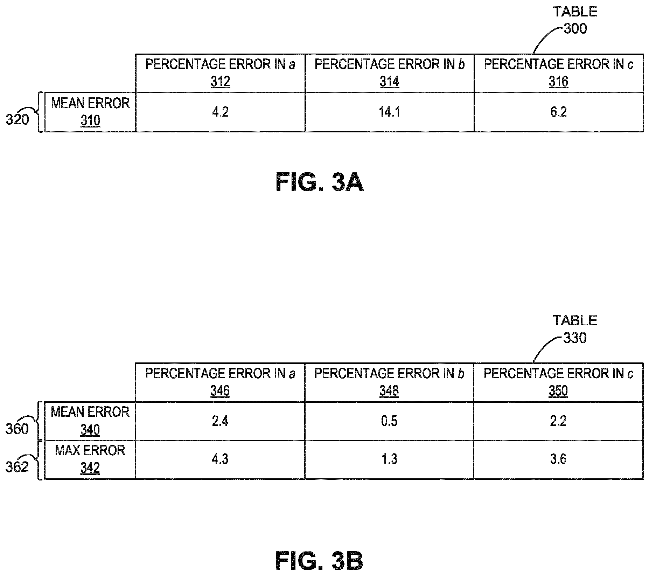

FIG. 2 presents a flow chart 200 illustrating a method for facilitating predictive condition modeling of physical assets, in accordance with an embodiment of the present invention. During operation, the system can determine a set of physical assets (operation 202). The system can assign the physical assets into one or more clusters based on measured characteristics for the physical assets (operation 204). The system can initialize, for each physical asset in a cluster, a set of maintenance times randomly and based on constraints associated with the physical asset (operation 206). A set of maintenance times can include a number of maintenance activities and a time for a respective maintenance activity, and a constraint can be based on domain knowledge and can include, e.g., a minimum or a maximum time duration between successive maintenance activities. The system can use a model $f_\theta(X_i, M_j)$, which is a combined model of degradation and maintenance as a function of independent variables $X_i$ and $M_j$. The subscript $i$ refers to the inspection time when the variable $X$ is measured, and $M_j$ denotes the set of maintenance times for an asset $j$. The term $\theta$ refers to the unknown model parameters to be estimated. The function $f_\theta$ is indicated in the degradation model (as shown below in relation to FIGs. 3A and 3B). An exemplary equation for the combined degradation model can be as follows:

$$\hat{\theta} = \min_\theta \sum_{j=1}^{N_{part}} \sum_{i=1}^{N_i} \left( Y_i - f_\theta \left( X_i, M_j \right) \right)^2 \qquad \text{Equation (1)}$$

The term $Y_i$ refers to the value of the measured characteristic at the $i^{th}$ inspection time. The inner sum refers to a summation for iterations over all inspection times for each physical asset, while the outer sum refers to a summation for all the physical assets in a cluster.

The system can then estimate model parameters ($\theta$) for the physical asset based on the combined model, which can indicate the set of (initial) maintenance times, a value of a measured characteristic for the physical asset at a given inspection time, a number of inspections, and a time for a respective inspection (operation 208). The system can determine or enumerate all possible maintenance times for the physical asset, wherein a maximum number of maintenance times exist (operation 210). That is, the number of maintenances times is a finite set because an upper bound exists on the number of maintenance times. Let $\{ M_j^1, \dots, M_j^S \}$ denote all the possible maintenance times for asset j. Next, the system can calculate, based on the possible maintenance times, updated values for the set of maintenance times for the physical asset based on the degradation model and the estimated model parameters (operation 212). An exemplary formula to estimate the maintenance times can be as follows:

$$M_j = \min_{M_j^1, \dots, M_j^S} \sum_{i=1}^{N_i} \left( Y_i - f_\theta \left( X_i, M_j^k \right) \right)^2 \qquad \text{Equation (2)}$$

Upon calculating the updated values for the set of maintenance times, if the system determines that an average change in the maintenance times is greater than a predetermined threshold (decision 214), the system repeats the process of estimating model parameters and calculating updated maintenance times. That is, the system re-estimates the model parameters and also re-calculates the maintenance times. The system sets the indicated maintenance times in the degradation model to the updated values for the set of maintenance times (operation 216) when re-estimating the model parameters. Furthermore, the system uses the re-estimated model parameters when re-calculating the updated maintenance times.

Upon calculating the updated values for the set of maintenance times (whether for the first time or upon an iteration), if the system determines that an average change in the maintenance times is not greater than (e.g., is less than or equal to) the predetermined threshold (decision 214), the system uses the calculated updated values for the set of maintenance times as the predicted maintenance schedule (e.g., predicted maintenance schedule 124 of FIG. 1A), and the operation returns. Thus, the system iterates through the two steps of first, fixing the maintenance times and estimating the model parameters, and second, fixing the model parameters and calculating the maintenance times, until the appropriate values converge, over a single physical asset, and over all physical assets in a cluster.

## Exemplary Degradation Models and Trial Results

An exemplary degradation model may use a quadratic-based formula:

$$y = a + bt + ct^2 \qquad \text{Equation (3)}$$

$$y\,(premaintenance) = y\,(postmaintenance) - \Delta \qquad \text{Equation (4)}$$

Equation (3) indicates the degradation model, and equation (4) indicates the maintenance model. Assume the following: The terms $a$, $b$, and $c$ are the model parameters, which initial values are to be determined (estimated by $\theta$ in Equation (1)). The number and times of maintenance activities are unknown. The term $\Delta$ is known and refers to the change in a given parameter due to a maintenance activity. The term *y* refers to a function of the maintenance model, as shown in Equation (4). The term *t* is the time from the last maintenance activity. The number and times of inspection are known.

Implementing the algorithm described in relation to FIG. 2 (and Equations (1), (2), (3), and (4)) over ten trials with different initial conditions results in the table depicted in FIG. 3A. FIG. 3A illustrates an exemplary table 300 indicating results from various trials, in accordance with an embodiment of the present invention. Table 300 can include a mean error 310 row, a percentage error in *a* 312 column, a percentage error in *b* 314 column, and a percentage error in *c* 316 column. The true initial value of *a* is determined to be 2.35, while the values of *b* and *c* are determined to be 0.1 and 0.0005, respectively. The known value of Δ is 0.3. The number of inspections is 6, and the times of inspection are [1.0000, 9.3333, 17.6667, 26.0000, 34.3333, and 50.0000]. Based on this information, table 300 can include an entry 320 where the mean percentage error in *a* is 4.2%, the mean percentage error in *b* is 14.4%, and the mean percentage error in *c* is 6.2%.

As another example, the degradation model may use a periodic component:

$$y = a + bt + c\sin(\omega t) \qquad\qquad \text{Equation (5)}$$

$$y\,(premaintenance) = y\,(postmaintenance) - \Delta \qquad \text{Equation (6)}$$

Equation (5) indicates the degradation model, and equation (6) (similar to equation (3)) indicates the maintenance model. Assume the following: The terms *a, b,* and *c* are the model parameters, which initial values are to be determined (estimated by $\theta$ in Equation (1)). The number and times of maintenance activities are unknown. The term Δ is known and refers to the change in a given parameter due to a maintenance activity. The term $\omega$ is known and is used as a periodic constant for the term *t.* The term *y* refers to a function of the maintenance model, as shown in Equation (4). The term *t* is the time from the last maintenance activity. The number and times of inspection are known.

Implementing the algorithm described in relation to FIG. 2 (and Equations (1), (2), (5), and (6)) over ten trials with different initial conditions results in the table depicted in FIG. 3B. FIG. 3B illustrates an exemplary table 330 indicating results from various trials, in accordance with an embodiment of the present invention. Table 330 can include a mean error 340 row, a max error 342, a percentage error in *a* 346 column, a percentage error in *b* 348 column, and a percentage error in *c* 350 column. The true initial value of *a* is determined to be 2.35, while the values of *b* and *c* are determined to be 0.7 and 3.0, respectively. The known value of Δ and $\omega$ are 0.3 and $2\pi/20$, respectively. The number of inspections is 6, and the times of inspection are [1.0000, 9.3333, 17.6667, 26.0000, 34.3333, and 50.0000]. Based on this information, table 330 can include an entry 360 where the mean percentage error in *a* is 2.4%, the mean percentage error in *b* is 0.5%, and the mean percentage error in *c* is 2.2%. Table 330 can also include an entry 362 where the max percentage error in *a* is 4.3%, the max percentage error in *b* is 1.3%, and the max percentage error in c is 3.6%.

### Method for Facilitating Development of Predictive Degradation Model for Railway Tracks

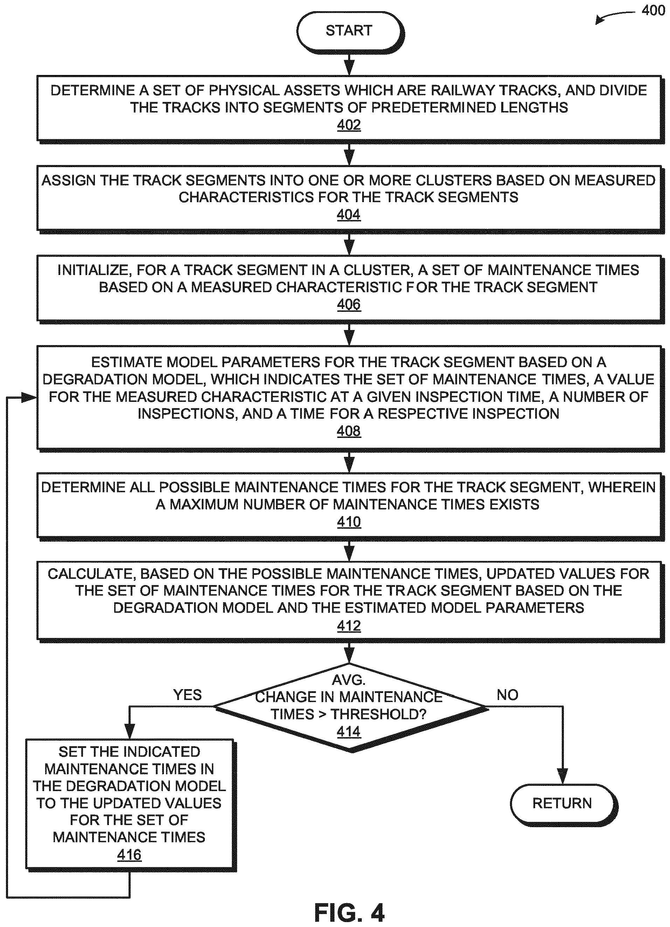

FIG. 4 presents a flow chart 400 illustrating a method for facilitating predictive condition modeling of physical assets which are railway tracks, in accordance with an embodiment of the present invention. During operation, the system can determine a set of physical assets which are railway tracks, and divide the tracks into segments of predetermined lengths (operation 402). The system can assign the track segments into one or more clusters based on measured characteristics for the track segments (operation 404). The system can initialize, for each track segment in a cluster, a set of maintenance times randomly and based on constraints associated with the track segment (operation 406). As described above, a set of maintenance times can include a number of maintenance activities and a time for a respective maintenance activity, and a constraint can include a minimum or a maximum time duration between successive maintenance activities. The system can use a combined model of degradation and maintenance as a function of independent variables, as described above in relation to Equation (1) and operation 208 of FIG. 2.

The system can then estimate model parameters for the track segment based on the combined model, which can indicate the set of (initial) maintenance times, a value of a measured characteristic for the track segment at a given inspection time, a number of inspections, and a time for a respective inspection (operation 408). The system can determine or enumerate all possible maintenance times for the track segment, wherein a maximum number of maintenance times exist (operation 410). That is, the number of maintenances times is a finite set because an upper bound exists on the number of maintenance times. Next, the system can calculate, based on the possible maintenance times, updated values for the set of maintenance times for the physical asset based on the degradation model and the estimated model parameters (operation 412), as described above in relation to Equation (2) and operation 212 of FIG. 2.

Upon calculating the updated values for the set of maintenance times, if the system determines that an average change in the maintenance times is greater than a predetermined threshold (decision 414), the system repeats the process of estimating model parameters and calculating updated maintenance times. That is, the system re-estimates the model parameters and also re-calculates the maintenance times. The system sets the indicated maintenance times in the degradation model to the updated values for the set of maintenance times (operation 416) when re-estimating the model parameters. The system further uses the re-estimated model parameters when re-calculating the updated maintenance times.

Upon calculating the updated values for the set of maintenance times (whether for the first time or upon an iteration), if the system determines that an average change in the maintenance times is not greater than (e.g., is less than or equal to) the predetermined threshold (decision 414), the system uses the calculated updated values for the set of maintenance times as the predicted maintenance schedule (e.g., predicted maintenance schedule 124 of FIG. 1A), and the operation returns. Thus, the system iterates through the two steps of first, fixing the maintenance times and estimating the model parameters, and second, fixing the model parameters and calculating the maintenance times, until the appropriate values converge, over a single track segment, and over all track segment in a cluster.

Note that physical assets can include railway tracks which are divided into railway segments, which are used as the physical assets upon which to perform the predictive condition modeling, as described above in relation to FIG. 4. Physical assets can also include bridges. A method for facilitating predictive condition modeling of physical assets which are bridges can include assigning the bridges into one or more clusters based on measured characteristics for the bridges (similar to operations 204 and 404 of FIGs. 2 and 4, respectively), and further performing operations similar to operations 206-216 and 406-416 of FIGs. 2 and 4, respectively.

**Exemplary Computer and Communication System**

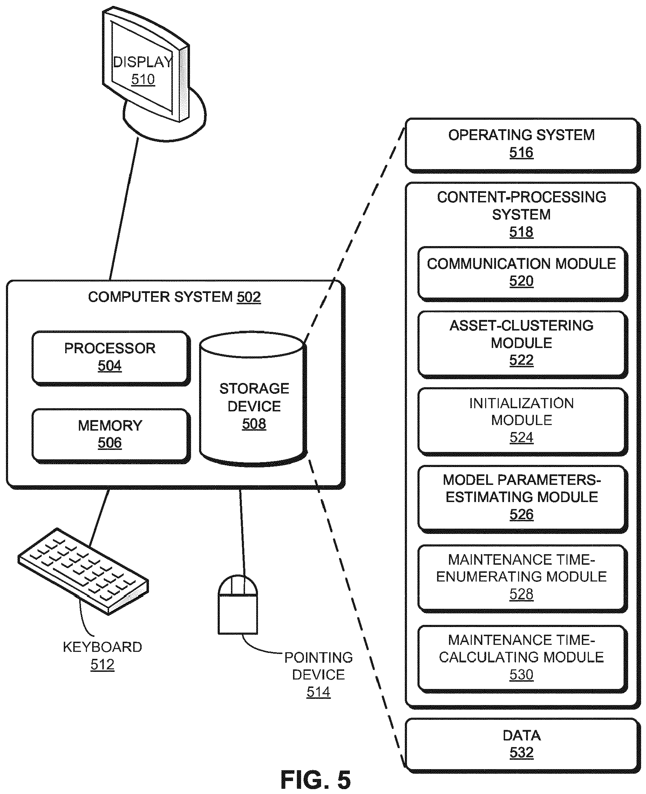

FIG. 5 illustrates an exemplary distributed computer and communication system 502 that facilitates predictive condition modeling of physical assets, in accordance with an embodiment of the present invention. Computer system 502 includes a processor 504, a memory 506, and a storage device 508. Memory 506 can include a volatile memory (e.g., RAM) that serves as a managed memory, and can be used to store one or more memory pools. Furthermore, computer system 502 can be coupled to a display device 510, a keyboard 512, and a pointing device 514. In some embodiments, computer system 502 can be part of a mobile computing device, such as a smartphone, a mobile phone, a tablet, a three-dimensional viewing glass, or any other mobile computing device. Storage device 508 can store an operating system 516, a content-processing system 518, and data 532.

Content-processing system 518 can include instructions, which when executed by computer system 502, can cause computer system 502 to perform methods and/or processes described in this disclosure. Specifically, content-processing system 518 may include instructions for sending and/or receiving data packets to/from other network nodes across a computer network (communication module 520). A data packet can include a message that indicates a value for a measured characteristic, or other related data.

Content-processing system 518 can include instructions for assigning physical assets into one or more clusters based on measured characteristics for the physical assets (asset-clustering module 522). Content-processing system 518 can also include instructions for initializing, for a physical asset in a cluster, a set of maintenance times randomly and based on constraints associated with the physical asset (initialization module 524). Content-processing system 518 can include instructions for estimating model parameters for the physical asset based on a degradation model, which indicates the set of maintenance times, a value for the measured characteristic at a given inspection time, a number of inspections, and a time for a respective inspection (model parameters-estimating module). Content-processing system 518 can further include instructions for calculating updated values for the set of maintenance times based on the degradation model and the estimated model parameters (maintenance time-calculating module 530). Content-processing system 518 can include instructions for, in response to determining that an average change in maintenance times over all the physical assets in the cluster is greater than a predetermined threshold (maintenance time-enumerating module 528): re-estimating the model parameters for the physical asset (model parameters-estimating module 526); and re-calculating the updated values for the set of maintenance times for the physical asset (maintenance time-calculating module 530).

Content-processing system 518 can further include instructions for, in response to determining that the average change in maintenance times over all the physical assets in the cluster is not greater than the predetermined threshold (maintenance time-enumerating module 528), returning the updated values for the set of maintenance times to a requesting entity in a predicted maintenance schedule for all the physical assets in the cluster (communication module 520). Content-processing system 518 can also include instructions for determining all possible maintenance times for the physical asset, wherein a maximum number of maintenance times exists (maintenance time-enumerating module 528).

Data 532 can include any data that is required as input or that is generated as output by the methods and/or processes described in this disclosure. Specifically, data 532 can store at least: a measured characteristic for a physical asset; a set of maintenance times for a physical asset; an indication of a physical asset in a cluster; a cluster; model parameters for a physical asset; a degradation model; a value for a measured characteristic at a given inspection time; a number of inspections; a time for an inspection; updated values for a set of maintenance times; re-estimated model parameters; an average change in maintenance times over all the physical assets in a cluster; a predetermined threshold; a maintenance schedule; a number of maintenance activities; a time for a maintenance activity; all possible maintenance times for a physical asset; a maximum number of maintenance times; a division of railway tracks into track segments; a predetermined length; an indicated physical asset as a railway track, a railway segment, or a bridge; a period of time; a date of manufacture of the physical asset; a manufacturer or owner of the physical asset; a temperature or climate of the area surrounding the physical asset; an amount of usage of the physical asset, including a weight and speed of freight or other vehicles traveling over the physical asset; a location of the physical asset; a geometry of the physical asset in relation to other physical assets; a set of data points; a discontinuous model; a non-linear discontinuous model; a discontinuity in a model; and a magnitude of a discontinuity.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules or apparatus. The hardware modules or apparatus can include, but are not limited to, application-specific integrated circuit (ASIC) chips, field-programmable gate arrays (FPGAs), dedicated or shared processors that execute a particular software module or a piece of code at a particular time, and other programmable-logic devices now known or later developed. When the hardware modules or apparatus are activated, they perform the methods and processes included within them.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A computer-implemented method for facilitating development of a degradation model, the method comprising:

   assigning physical assets into one or more clusters based on measured characteristics for the physical assets;
   initializing, for a physical asset in a cluster, a set of maintenance times randomly and based on constraints associated with the physical asset;
   estimating model parameters for the physical asset based on a degradation model, which indicates the set of maintenance times, a value of a measured characteristic for the physical asset at a given inspection time, a number of inspections, and a time for a respective inspection;
   calculating updated values for the set of maintenance times based on the degradation model and the estimated model parameters; and
   in response to determining that an average change in maintenance times over all the physical assets in the cluster is greater than a predetermined threshold:

      re-estimating the model parameters for the physical asset; and
      re-calculating the updated values for the set of maintenance times for the physical asset,

   thereby facilitating development of the degradation model, which predicts a maintenance schedule and a condition of the physical assets over time.

2. The method of claim 1, wherein the set of maintenance times indicates a number of maintenance activities and a time for a respective maintenance activity, and wherein a constraint includes a minimum or a maximum time duration between successive maintenance activities.

3. The method of claim 1, wherein re-estimating the model parameters for the physical asset is based on the degradation model and the updated values for the set of maintenance times; and

wherein re-calculating the updated values for the set of maintenance times for the physical asset is based on the degradation model and the re-estimated model parameters.

4. A computer system for facilitating development of a degradation model, the system comprising:

a processor; and

a storage device storing instructions that when executed by the processor cause the processor to perform a method, the method comprising:

assigning physical assets into one or more clusters based on measured characteristics for the physical assets;

initializing, for a physical asset in a cluster, a set of maintenance times randomly and based on constraints associated with the physical asset;

estimating model parameters for the physical asset based on a degradation model, which indicates the set of maintenance times, a value of a measured characteristic for the physical asset at a given inspection time, a number of inspections, and a time for a respective inspection;

calculating updated values for the set of maintenance times based on the degradation model and the estimated model parameters; and

in response to determining that an average change in maintenance times over all the physical assets in the cluster is greater than a predetermined threshold:

re-estimating the model parameters for the physical asset; and

re-calculating the updated values for the set of maintenance times for the physical asset,

thereby facilitating development of the degradation model, which predicts a maintenance schedule and a condition of the physical assets over time.

5. The computer system of claim 4, wherein the set of maintenance times indicates a number of maintenance activities and a time for a respective maintenance activity, and wherein a constraint includes a minimum or a maximum time duration between successive maintenance activities.

6. The computer system of claim 4, wherein re-estimating the model parameters for the physical asset is based on the degradation model and the updated values for the set of maintenance times; and

wherein re-calculating the updated values for the set of maintenance times for the physical asset is based on the degradation model and the re-estimated model parameters.

7. A non-transitory computer-readable storage medium storing instructions that when executed by a computer cause the computer to perform a method, the method comprising:

assigning physical assets into one or more clusters based on measured characteristics for the physical assets;

initializing, for a physical asset in a cluster, a set of maintenance times randomly and based on constraints associated with the physical asset;

estimating model parameters for the physical asset based on a degradation model, which indicates the set of maintenance times, a value of a measured characteristic for the physical asset at a given inspection time, a number of inspections, and a time for a respective inspection;

calculating updated values for the set of maintenance times based on the degradation model and the estimated model parameters; and

in response to determining that an average change in maintenance times over all the physical assets in the cluster is greater than a predetermined threshold:

re-estimating the model parameters for the physical asset; and

re-calculating the updated values for the set of maintenance times for the physical asset,

thereby facilitating development of the degradation model, which predicts a maintenance schedule and a condition of the physical assets over time.

**8.** The storage medium of claim 7, wherein the set of maintenance times indicates a number of maintenance activities and a time for a respective maintenance activity, and wherein a constraint includes a minimum or a maximum time duration between successive maintenance activities.

**9.** The storage medium of claim 7, wherein re-estimating the model parameters for the physical asset is based on the degradation model and the updated values for the set of maintenance times; and
wherein re-calculating the updated values for the set of maintenance times for the physical asset is based on the degradation model and the re-estimated model parameters.

**10.** A computer-implemented method, comprising:
fitting a non-linear discontinuous model to a set of data points, wherein a magnitude of one or more discontinuities in the model is known.

PHYSICAL
ASSETS 104

DATA 120

DEVICE
106

USER
114

USER
112

DEVICE
102

DATA
120/122

DATA 120

NETWORK
102

DATA
122

DEVICE
108

PREDICTED
MAINTENANCE
SCHEDULE
124

PREDICTED
MAINTENANCE
SCHEDULE
124

PREDICTED MAINTENANCE
SCHEDULE 124:
{ NUMBER OF MAINTENANCE
ACTIVITIES "j" 126,
{ MAINTENANCE ACTIVITY
TIMES 128.1-128.j } }

FIG. 1A

DEGRADATION
MODEL
150

*y* = measured
characteristic

X

X

X

X

X

*t1*

*t2*

*t* = time

## FIG. 1B

MAINTENANCE
MODEL
190

*y* = measured
characteristic

CHANGE IN
PARAMETER
DUE TO
MAINTENANCE
192

*t1*

*t2*

*t* = time

## FIG. 1C

200

```
              ┌─────────────┐
              │    START    │
              └──────┬──────┘
                     ▼
```

DETERMINE A SET OF PHYSICAL ASSETS
202

ASSIGN THE PHYSICAL ASSETS INTO ONE OR MORE CLUSTERS BASED ON MEASURED
CHARACTERISTICS FOR THE PHYSICAL ASSETS
204

INITIALIZE, FOR A PHYSICAL ASSET IN A CLUSTER, A SET OF MAINTENANCE TIMES
BASED ON A MEASURED CHARACTERISTIC FOR THE PHYSICAL ASSET
206

ESTIMATE MODEL PARAMETERS FOR THE PHYSICAL ASSET BASED ON A
DEGRADATION MODEL, WHICH INDICATES THE SET OF MAINTENANCE TIMES, A VALUE
FOR THE MEASURED CHARACTERISTIC AT A GIVEN INSPECTION TIME, A NUMBER OF
INSPECTIONS, AND A TIME FOR A RESPECTIVE INSPECTION
208

DETERMINE ALL POSSIBLE MAINTENANCE TIMES FOR THE PHYSICAL ASSET, WHEREIN
A MAXIMUM NUMBER OF MAINTENANCE TIMES EXISTS
210

CALCULATE, BASED ON THE POSSIBLE MAINTENANCE TIMES, UPDATED VALUES FOR
THE SET OF MAINTENANCE TIMES FOR THE PHYSICAL ASSET BASED ON THE
DEGRADATION MODEL AND THE ESTIMATED MODEL PARAMETERS
212

AVG.
CHANGE IN MAINTENANCE
TIMES > THRESHOLD?
214

YES                                      NO

SET THE INDICATED
MAINTENANCE TIMES IN
THE DEGRADATION MODEL
TO THE UPDATED VALUES
FOR THE SET OF
MAINTENANCE TIMES
216

RETURN

**FIG. 2**

TABLE
300

| | PERCENTAGE ERROR IN *a* 312 | PERCENTAGE ERROR IN *b* 314 | PERCENTAGE ERROR IN *c* 316 |
|---|---|---|---|
| MEAN ERROR 310 | 4.2 | 14.1 | 6.2 |

320

## FIG. 3A

TABLE
330

| | PERCENTAGE ERROR IN *a* 346 | PERCENTAGE ERROR IN *b* 348 | PERCENTAGE ERROR IN *c* 350 |
|---|---|---|---|
| MEAN ERROR 340 | 2.4 | 0.5 | 2.2 |
| MAX ERROR 342 | 4.3 | 1.3 | 3.6 |

360

362

## FIG. 3B

400

START

DETERMINE A SET OF PHYSICAL ASSETS WHICH ARE RAILWAY TRACKS, AND DIVIDE THE TRACKS INTO SEGMENTS OF PREDETERMINED LENGTHS
402

ASSIGN THE TRACK SEGMENTS INTO ONE OR MORE CLUSTERS BASED ON MEASURED CHARACTERISTICS FOR THE TRACK SEGMENTS
404

INITIALIZE, FOR A TRACK SEGMENT IN A CLUSTER, A SET OF MAINTENANCE TIMES BASED ON A MEASURED CHARACTERISTIC FOR THE TRACK SEGMENT
406

ESTIMATE MODEL PARAMETERS FOR THE TRACK SEGMENT BASED ON A DEGRADATION MODEL, WHICH INDICATES THE SET OF MAINTENANCE TIMES, A VALUE FOR THE MEASURED CHARACTERISTIC AT A GIVEN INSPECTION TIME, A NUMBER OF INSPECTIONS, AND A TIME FOR A RESPECTIVE INSPECTION
408

DETERMINE ALL POSSIBLE MAINTENANCE TIMES FOR THE TRACK SEGMENT, WHEREIN A MAXIMUM NUMBER OF MAINTENANCE TIMES EXISTS
410

CALCULATE, BASED ON THE POSSIBLE MAINTENANCE TIMES, UPDATED VALUES FOR THE SET OF MAINTENANCE TIMES FOR THE TRACK SEGMENT BASED ON THE DEGRADATION MODEL AND THE ESTIMATED MODEL PARAMETERS
412

AVG. CHANGE IN MAINTENANCE TIMES > THRESHOLD?
414

YES

NO

SET THE INDICATED MAINTENANCE TIMES IN THE DEGRADATION MODEL TO THE UPDATED VALUES FOR THE SET OF MAINTENANCE TIMES
416

RETURN

**FIG. 4**

**FIG. 5**

Europäisches
Patentamt

European
Patent Office

Office européen
des brevets

# EUROPEAN SEARCH REPORT

Application Number

EP 18 16 5988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 024506 A1 (DEUTSCH ZENTR LUFT & RAUMFAHRT [DE]) 9 December 2010 (2010-12-09) * abstract * * paragraph [0007] - paragraph [0019] * ----- | 1-10 | INV. G06Q10/00 |

TECHNICAL FIELDS
SEARCHED      (IPC)

G06Q

The present search report has been drawn up for all claims

| Place of search | Date of completion of the search | Examiner |
|---|---|---|
| Munich | 31 May 2018 | Gardiner, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 16 5988

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2018

| Patent document cited in search report | Publication date | Patent family member(s) | Publication date |
|---|---|---|---|
| DE 102009024506 A1 | 09-12-2010 | NONE | |

EPO FORM P0459

For more details about this annex : see Official Journal of the European Patent Office, No. 12/82